# EUROPEAN PATENT SPECIFICATION

(11) **EP 3 400 733 B1**
(45) Date of publication and mention of the grant of the patent: **25.08.2021**
(21) Application number: 17736105.2
(22) Date of filing: 05.01.2017
(51) Int. Cl.: H04L 29/08, H04W 28/06, H04W 28/02, H04W 52/36, H04B 7/26, H04W 74/08, H04W 72/12, H04W 88/02

(54) **METHOD FOR TRANSMITTING A MAC PDU IN WIRELESS COMMUNICATION SYSTEM AND A DEVICE THEREFOR**
VERFAHREN ZUM SENDEN EINER MAC-PDU IN EINEM DRAHTLOSKOMMUNIKATIONSSYSTEM UND VORRICHTUNG DAFÜR
PROCÉDÉ DE TRANSMISSION D'UNE PDU MAC DANS UN SYSTÈME DE COMMUNICATION SANS FIL, ET DISPOSITIF ASSOCIÉ

(30) Priority: 06.01.2016 US 201662275254 P; 01.02.2016 US 201662289371 P
(43) Date of publication of application: 14.11.2018
(73) Proprietor: LG Electronics Inc., Seoul 07336 (KR)
(72) Inventor: LEE, Sunyoung, Seoul 06772 (KR); LEE, Youngdae, Seoul 06772 (KR); YI, Seungjune, Seoul 06772 (KR)
(74) Representative: Katérle, Axel
(86) International application number: PCT/KR2017/000127
(87) International publication number: WO 2017/119733

(56) References cited:
- WO-A1-2015/119483
- WO-A1-2015/142082
- WO-A2-2009/054655
- US-A1- 2009 163 211
- US-A1- 2011 267 959
- US-A1- 2012 113 922
- US-A1- 2015 163 695
- VODAFONE GROUP PLC: "Resolution of open issues in Annex F "Link Layer design" of TR 45.820", 3GPP DRAFT; GPC150583 REV 0538 R 0467 ANNEX F CLEAN UP P-CR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. GERAN WG2, no. Kista, Sweden; 20150729 - 20150702 2 July 2015 (2015-07-02), XP051625687, Retrieved from the Internet: URL:http://www.3gpp.org/ftp/tsg%5Fgeran/TS G%5FGERAN/AD%2DHOCs/Ad%2Dhoc%5FGERAN1%2DGE RAN2%5FCIoT/Docs/GPC150583%2Ezip [retrieved on 2015-07-02]
- MEDIATEK INC.: 'Random Access Procedure for NB-IoT' R2-154462, 3GPP TSG-RAN2 30 September 2015, XP051005027

## Description

### Technical Field

The present invention relates to a wireless communication system and, more particularly, to a method for transmitting a MAC PDU in wireless communication system and a device therefor.

### Background Art

As an example of a mobile communication system to which the present invention is applicable, a 3rd Generation Partnership Project Long Term Evolution (hereinafter, referred to as LTE) communication system is described in brief.

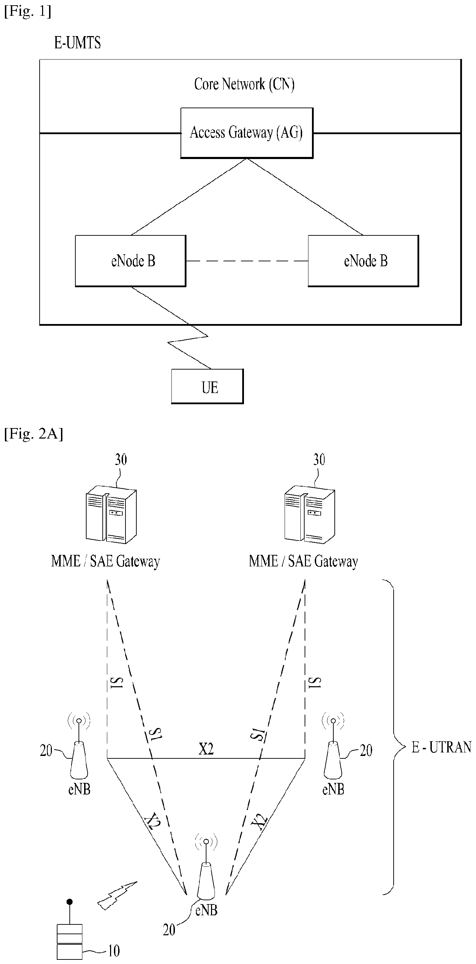

FIG. 1 is a view schematically illustrating a network structure of an E-UMTS as an exemplary radio communication system. An Evolved Universal Mobile Telecommunications System (E-UMTS) is an advanced version of a conventional Universal Mobile Telecommunications System (UMTS) and basic standardization thereof is currently underway in the 3GPP. E-UMTS may be generally referred to as a Long Term Evolution (LTE) system. For details of the technical specifications of the UMTS and E-UMTS, reference can be made to Release 7 and Release 8 of "3rd Generation Partnership Project; Technical Specification Group Radio Access Network".

Referring to FIG. 1, the E-UMTS includes a User Equipment (UE), eNode Bs (eNBs), and an Access Gateway (AG) which is located at an end of the network (E-UTRAN) and connected to an external network. The eNBs may simultaneously transmit multiple data streams for a broadcast service, a multicast service, and/or a unicast service.

One or more cells may exist per eNB. The cell is set to operate in one of bandwidths such as 1.25, 2.5, 5, 10, 15, and 20 MHz and provides a downlink (DL) or uplink (UL) transmission service to a plurality of UEs in the bandwidth. Different cells may be set to provide different bandwidths. The eNB controls data transmission or reception to and from a plurality of UEs. The eNB transmits DL scheduling information of DL data to a corresponding UE so as to inform the UE of a time/frequency domain in which the DL data is supposed to be transmitted, coding, a data size, and hybrid automatic repeat and request (HARQ)-related information. In addition, the eNB transmits UL scheduling information of UL data to a corresponding UE so as to inform the UE of a time/frequency domain which may be used by the UE, coding, a data size, and HARQ-related information. An interface for transmitting user traffic or control traffic may be used between eNBs. A core network (CN) may include the AG and a network node or the like for user registration of UEs. The AG manages the mobility of a UE on a tracking area (TA) basis. One TA includes a plurality of cells.

Although wireless communication technology has been developed to LTE based on wideband code division multiple access (WCDMA), the demands and expectations of users and service providers are on the rise. In addition, considering other radio access technologies under development, new technological evolution is required to secure high competitiveness in the future. Decrease in cost per bit, increase in service availability, flexible use of frequency bands, a simplified structure, an open interface, appropriate power consumption of UEs, and the like are required.
WO 2009/054655 A2 relates to a method for exchanging data blocks by a base station and a terminal in an involved Universal Mobile Telecommunications System (E-UMTS) or a Long Term Evolution (LTE) system, in which a transmitting side effectively transmits data transmitted via a Common Control Logical Channel to a receiving side, and the receiving side accurately separates unnecessary data from the data received via the Common Control Logical Channel.
WO 2015/142082 A1 relates to a user equipment (UE) configuring a device-to-device (D2D) logical channel corresponding to the public safety transmission or the V2X transmission, and triggering a proximity-based services (ProSe) BSR for the D2D logical channel. The UE accommodates the triggered ProSe BSR in a media access control (MAC) protocol data unit (PDU) if the MAC PDU can accommodate only one BSR MAC control element (CE).
WO 2015/119483 A1 discloses that a first user equipment (UE) determines a value of a field in a header based on an identified QoS of the D2D data, and transmits to a second UE a layer 2 protocol data unit (PDU), which includes the header including the field having the determined value. Upon receiving the layer 2 PDU, the second UE identifies the QoS of the D2D data based on the value of the field in the header.

### Disclosure of Invention

### Technical Problem

An object of the present invention devised to solve the problem lies in a method and device for transmitting a MAC PDU in wireless communication system.

The technical problems solved by the present invention are not limited to the above technical problems and those skilled in the art may understand other technical problems from the following description.

### Solution to Problem

The object of the present invention can be achieved by providing a method for User Equipment (UE) operating in a wireless communication system as set forth in the appended claims.

In another aspect of the present invention, provided herein is a communication apparatus as set forth in the appended claims. Preferred embodiments are covered by the appended dependent claims.

It is to be understood that both the foregoing general description and the following detailed description of the present invention are exemplary and explanatory and are intended to provide further explanation of the invention as claimed.

### Advantageous Effects of Invention

It is invented that an UE indicates to an eNB that a MAC PDU includes a combination of multiple types of data in the MAC PDU by using an Indicator identifying the combination of multiple types of data included in the MAC PDU.

It will be appreciated by persons skilled in the art that the effects achieved by the present invention are not limited to what has been particularly described hereinabove and other advantages of the present invention will be more clearly understood from the following detailed description taken in conjunction with the accompanying drawings.

### Brief Description of Drawings

The accompanying drawings, which are included to provide a further understanding of the invention and are incorporated in and constitute a part of this application, illustrate examples of the invention and together with the description serve to explain the principle of the invention.
FIG. 1 is a diagram showing a network structure of an Evolved Universal Mobile Telecommunications System (E-UMTS) as an example of a wireless communication system;
FIG. 2A is a block diagram illustrating network structure of an evolved universal mobile telecommunication system (E-UMTS), and FIG. 2B is a block diagram depicting architecture of a typical E-UTRAN and a typical EPC;
FIG. 3 is a diagram showing a control plane and a user plane of a radio interface protocol between a UE and an E-UTRAN based on a 3rd generation partnership project (3GPP) radio access network standard;
FIG. 4 is a view showing an example of a physical channel structure used in an E-UMTS system;
FIG. 5 is a block diagram of a communication apparatus according to an embodiment of the present invention;
FIG. 6A is an example for data transmission and reception for a Category 0 low complexity UE, FIG. 6B is an example for repetitions for data transmission for a Category 0 low complexity UE;
FIG. 7 is a diagram for MAC structure overview in a UE side;
FIGs. 8A to 8C are conceptual diagrams illustrating for a MAC PDU structure;
FIG. 9 is a view illustrating an operating procedure of a UE and an eNB in a contention based random access procedure;
FIG. 10 is a conceptual diagram for transmitting a MAC PDU including an indicator identifying a combination of multiple types of data in wireless communication system according to embodiments of the present invention;
FIG. 11 is an example for a MAC PDU including an indicator identifying a combination of multiple types of data in wireless communication system according to embodiments of the present invention; and
FIG. 12 is an example for a MAC PDU including an LCID identifying MAC CE and CCCH MAC SDU in wireless communication system according to embodiments of the present invention.

### Best Mode for Carrying out the Invention

Universal mobile telecommunications system (UMTS) is a 3rd Generation (3G) asynchronous mobile communication system operating in wideband code division multiple access (WCDMA) based on European systems, global system for mobile communications (GSM) and general packet radio services (GPRS). The long-term evolution (LTE) of UMTS is under discussion by the 3rd generation partnership project (3GPP) that standardized UMTS.

The 3GPP LTE is a technology for enabling high-speed packet communications. Many schemes have been proposed for the LTE objective including those that aim to reduce user and provider costs, improve service quality, and expand and improve coverage and system capacity. The 3G LTE requires reduced cost per bit, increased service availability, flexible use of a frequency band, a simple structure, an open interface, and adequate power consumption of a terminal as an upper-level requirement.

Hereinafter, structures, operations, and other features of the present invention will be readily understood from the examples of the present invention, examples of which are illustrated in the accompanying drawings. Examples described later are examples in which technical features of the present invention are applied to a 3GPP system.

Although the examples of the present invention are described using a long term evolution (LTE) system and a LTE-advanced (LTE-A) system in the present specification, they are purely exemplary. Therefore, the examples of the present invention are applicable to any other communication system corresponding to the above definition. In addition, although the examples of the present invention are described based on a frequency division duplex (FDD) scheme in the present specification, the embodiments of the present invention may be easily modified and applied to a half-duplex FDD (H-FDD) scheme or a time division duplex (TDD) scheme.

FIG. 2A is a block diagram illustrating network structure of an evolved universal mobile telecommunication system (E-UMTS). The E-UMTS may be also referred to as an LTE system. The communication network is widely deployed to provide a variety of communication services such as voice (VoIP) through IMS and packet data.

As illustrated in FIG. 2A, the E-UMTS network includes an evolved UMTS terrestrial radio access network (E-UTRAN), an Evolved Packet Core (EPC) and one or more user equipment. The E-UTRAN may include one or more evolved NodeB (eNodeB) 20, and a plurality of user equipment (UE) 10 may be located in one cell. One or more E-UTRAN mobility management entity (MME)/system architecture evolution (SAE) gateways 30 may be positioned at the end of the network and connected to an external network.

As used herein, "downlink" refers to communication from eNodeB 20 to UE 10, and "uplink" refers to communication from the UE to an eNodeB. UE 10 refers to communication equipment carried by a user and may be also referred to as a mobile station (MS), a user terminal (UT), a subscriber station (SS) or a wireless device.

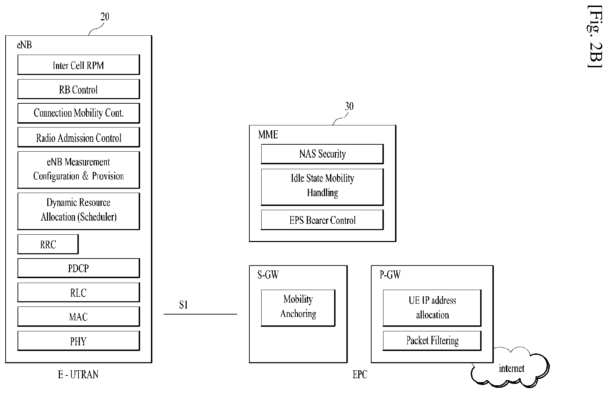

FIG. 2B is a block diagram depicting architecture of a typical E-UTRAN and a typical EPC.

As illustrated in FIG. 2B, an eNodeB 20 provides end points of a user plane and a control plane to the UE 10. MME/SAE gateway 30 provides an end point of a session and mobility management function for UE 10. The eNodeB and MME/SAE gateway may be connected via an S1 interface.

The eNodeB 20 is generally a fixed station that communicates with a UE 10, and may also be referred to as a base station (BS) or an access point. One eNodeB 20 may be deployed per cell. An interface for transmitting user traffic or control traffic may be used between eNodeBs 20.

The MME provides various functions including NAS signaling to eNodeBs 20, NAS signaling security, AS Security control, Inter CN node signaling for mobility between 3GPP access networks, Idle mode UE Reachability (including control and execution of paging retransmission), Tracking Area list management (for UE in idle and active mode), PDN GW and Serving GW selection, MME selection for handovers with MME change, SGSN selection for handovers to 2G or 3G 3GPP access networks, Roaming, Authentication, Bearer management functions including dedicated bearer establishment, Support for PWS (which includes ETWS and CMAS) message transmission. The SAE gateway host provides assorted functions including Per-user based packet filtering (by e.g. deep packet inspection), Lawful Interception, UE IP address allocation, Transport level packet marking in the downlink, UL and DL service level charging, gating and rate enforcement, DL rate enforcement based on APN-AMBR. For clarity MME/SAE gateway 30 will be referred to herein simply as a "gateway," but it is understood that this entity includes both an MME and an SAE gateway.

A plurality of nodes may be connected between eNodeB 20 and gateway 30 via the S1 interface. The eNodeBs 20 may be connected to each other via an X2 interface and neighboring eNodeBs may have a meshed network structure that has the X2 interface.

As illustrated, eNodeB 20 may perform functions of selection for gateway 30, routing toward the gateway during a Radio Resource Control (RRC) activation, scheduling and transmitting of paging messages, scheduling and transmitting of Broadcast Channel (BCCH) information, dynamic allocation of resources to UEs 10 in both uplink and downlink, configuration and provisioning of eNodeB measurements, radio bearer control, radio admission control (RAC), and connection mobility control in LTE_ACTIVE state. In the EPC, and as noted above, gateway 30 may perform functions of paging origination, LTE-IDLE state management, ciphering of the user plane, System Architecture Evolution (SAE) bearer control, and ciphering and integrity protection of Non-Access Stratum (NAS) signaling.

The EPC includes a mobility management entity (MME), a serving-gateway (S-GW), and a packet data network-gateway (PDN-GW). The MME has information about connections and capabilities of UEs, mainly for use in managing the mobility of the UEs. The S-GW is a gateway having the E-UTRAN as an end point, and the PDN-GW is a gateway having a packet data network (PDN) as an end point.

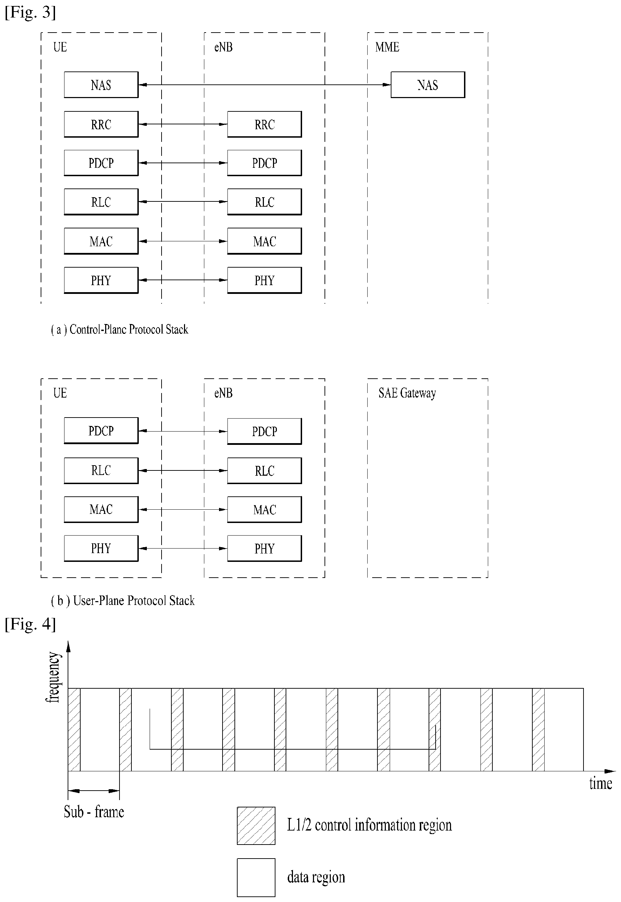

FIG. 3 is a diagram showing a control plane and a user plane of a radio interface protocol between a UE and an E-UTRAN based on a 3GPP radio access network standard. The control plane refers to a path used for transmitting control messages used for managing a call between the UE and the E-UTRAN. The user plane refers to a path used for transmitting data generated in an application layer, e.g., voice data or Internet packet data.

A physical (PHY) layer of a first layer provides an information transfer service to a higher layer using a physical channel. The PHY layer is connected to a medium access control (MAC) layer located on the higher layer via a transport channel. Data is transported between the MAC layer and the PHY layer via the transport channel. Data is transported between a physical layer of a transmitting side and a physical layer of a receiving side via physical channels. The physical channels use time and frequency as radio resources. In detail, the physical channel is modulated using an orthogonal frequency division multiple access (OFDMA) scheme in downlink and is modulated using a single carrier frequency division multiple access (SC-FDMA) scheme in uplink.

The MAC layer of a second layer provides a service to a radio link control (RLC) layer of a higher layer via a logical channel. The RLC layer of the second layer supports reliable data transmission. A function of the RLC layer may be implemented by a functional block of the MAC layer. A packet data convergence protocol (PDCP) layer of the second layer performs a header compression function to reduce unnecessary control information for efficient transmission of an Internet protocol (IP) packet such as an IP version 4 (IPv4) packet or an IP version 6 (IPv6) packet in a radio interface having a relatively small bandwidth.

A radio resource control (RRC) layer located at the bottom of a third layer is defined only in the control plane. The RRC layer controls logical channels, transport channels, and physical channels in relation to configuration, re-configuration, and release of radio bearers (RBs). An RB refers to a service that the second layer provides for data transmission between the UE and the E-UTRAN. To this end, the RRC layer of the UE and the RRC layer of the E-UTRAN exchange RRC messages with each other.

One cell of the eNB is set to operate in one of bandwidths such as 1.25, 2.5, 5, 10, 15, and 20 MHz and provides a downlink or uplink transmission service to a plurality of UEs in the bandwidth. Different cells may be set to provide different bandwidths.

Downlink transport channels for transmission of data from the E-UTRAN to the UE include a broadcast channel (BCH) for transmission of system information, a paging channel (PCH) for transmission of paging messages, and a downlink shared channel (SCH) for transmission of user traffic or control messages. Traffic or control messages of a downlink multicast or broadcast service may be transmitted through the downlink SCH and may also be transmitted through a separate downlink multicast channel (MCH).

Uplink transport channels for transmission of data from the UE to the E-UTRAN include a random access channel (RACH) for transmission of initial control messages and an uplink SCH for transmission of user traffic or control messages. Logical channels that are defined above the transport channels and mapped to the transport channels include a broadcast control channel (BCCH), a paging control channel (PCCH), a common control channel (CCCH), a multicast control channel (MCCH), and a multicast traffic channel (MTCH).

FIG. 4 is a view showing an example of a physical channel structure used in an E-UMTS system. A physical channel includes several subframes on a time axis and several subcarriers on a frequency axis. Here, one subframe includes a plurality of symbols on the time axis. One subframe includes a plurality of resource blocks and one resource block includes a plurality of symbols and a plurality of subcarriers. In addition, each subframe may use certain subcarriers of certain symbols (e.g., a first symbol) of a subframe for a physical downlink control channel (PDCCH), that is, an L1/L2 control channel. In FIG. 4, an L1/L2 control information transmission area (PDCCH) and a data area (PDSCH) are shown. In one embodiment, a radio frame of 10 ms is used and one radio frame includes 10 subframes. In addition, one subframe includes two consecutive slots. The length of one slot may be 0.5 ms. In addition, one subframe includes a plurality of OFDM symbols and a portion (e.g., a first symbol) of the plurality of OFDM symbols may be used for transmitting the L1/L2 control information. A transmission time interval (TTI) which is a unit time for transmitting data is 1ms.

A base station and a UE mostly transmit/receive data via a PDSCH, which is a physical channel, using a DL-SCH which is a transmission channel, except a certain control signal or certain service data. Information indicating to which UE (one or a plurality of UEs) PDSCH data is transmitted and how the UE receive and decode PDSCH data is transmitted in a state of being included in the PDCCH.

For example, in one embodiment, a certain PDCCH is CRC-masked with a radio network temporary identity (RNTI) "A" and information about data is transmitted using a radio resource "B" (e.g., a frequency location) and transmission format information "C" (e.g., a transmission block size, modulation, coding information or the like) via a certain subframe. Then, one or more UEs located in a cell monitor the PDCCH using its RNTI information. And, a specific UE with RNTI "A" reads the PDCCH and then receive the PDSCH indicated by B and C in the PDCCH information.

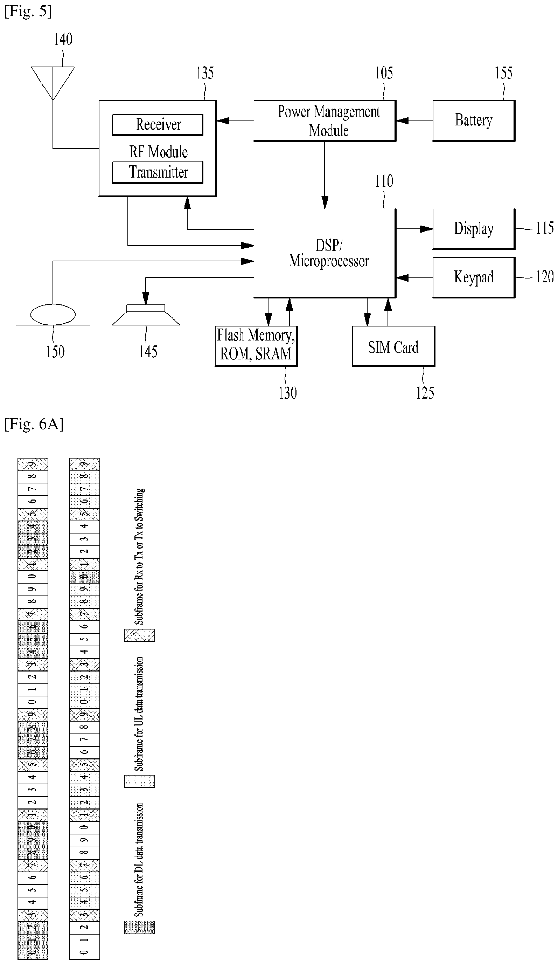

FIG. 5 is a block diagram of a communication apparatus according to an embodiment of the present invention.

The apparatus shown in FIG. 5 can be a user equipment (UE) and/or eNB adapted to perform the above mechanism, but it can be any apparatus for performing the same operation.

As shown in FIG. 5, the apparatus may comprises a DSP/microprocessor (110) and RF module (transmiceiver; 135). The DSP/microprocessor (110) is electrically connected with the transciver (135) and controls it. The apparatus may further include power management module (105), battery (155), display (115), keypad (120), SIM card (125), memory device (130), speaker (145) and input device (150), based on its implementation and designer's choice.

Specifically, FIG. 5 may represent a UE comprising a receiver (135) configured to receive a request message from a network, and a transmitter (135) configured to transmit the transmission or reception timing information to the network. These receiver and the transmitter can constitute the transceiver (135). The UE further comprises a processor (110) connected to the transceiver (135: receiver and transmitter).

Also, FIG. 5 may represent a network apparatus comprising a transmitter (135) configured to transmit a request message to a UE and a receiver (135) configured to receive the transmission or reception timing information from the UE. These transmitter and receiver may constitute the transceiver (135). The network further comprises a processor (110) connected to the transmitter and the receiver. This processor (110) may be configured to calculate latency based on the transmission or reception timing information.

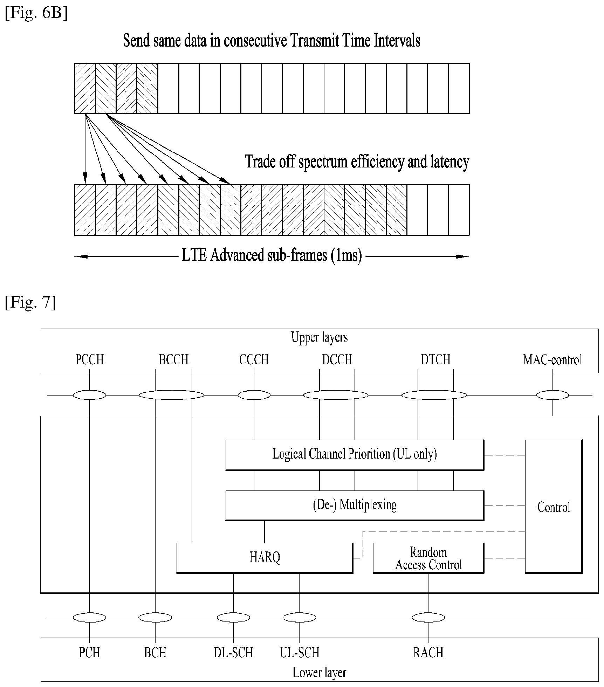

FIG. 6A is an example for data transmission and reception for a Category 0 low complexity UE, and FIG. 6B is an example for repetitions for data transmission for a Category 0 low complexity UE.

Such a communication technology as MTC is specialized from 3GPP to transmit and receive IoT-based information and the MTC has a difference according to each release of the technology. Release 10 and Release 11 are focusing on a method of controlling loads of IoT (M2M) products and a method of making the loads have least influence on a network when the IoT products make a request for accessing an eNB at the same time. Release 12 and Release 13 are focusing on a low-cost technology enabling a battery to be simply implemented and very little used by reducing complicated functions mounted on a legacy smartphone as many as possible.

Low complexity UEs are targeted to low-end (e.g. low average revenue per user, low data rate, delay tolerant) applications, e.g. some Machine-Type Communications.

A low complexity UE has reduced Tx and Rx capabilities compared to other UE of different categories.

In particular, a low complexity UE does not require such a function of high performance as a function of a smartphone and an amount of data used by the low complexity UE is not that big in general. Hence, there is no reason for a complicated and high-price communication module to come to the market for such a UE as the low complexity UE.

In order to manufacture a low-cost IoT (M2M) device, a concept such as UE Category 0 has been introduced. A UE category corresponds to a general figure used in 3GPP to indicate the amount of data capable of being processed by a UE in a communication modem. In general, as the amount of data to be processed is getting bigger, a price of a modem is also increasing due to a memory or performance enhancement. In case of a currently commercialized smartphone, performance of the smartphone is continuously increasing from 100Mbps to 150Mbps and 300Mbps on the basis of download.

Table 1 shows UE categories used in 3GPP.

**<Table 1>**

| UE Category | Downlink (velocity) | Uplink (velocity) | UE Category | Downlink (velocity) | Uplink (velocity) |
|---|---|---|---|---|---|
| 0 | 1 Mbps | 1 Mbps | 7 | 300 Mbps | 100 Mbps |
| 1 | 10 Mbps | 5 Mbps | 8 | 3 Gbps | 1.5 Gbp |
| 2 | 50 Mbps | 25 Mbps | 9 | 450 Mbps | 50 Mbps |
| 3 | 100 Mbps | 50 Mbps | 10 | 450 Mbps | 100 Mbps |
| 4 | 150 Mbps | 50 Mbps | 11 | 600 Mbps | 50 Mbps |
| 5 | 300 Mbps | 75 Mbps | 12 | 600 Mbps | 100 Mbps |
| 6 | 300 Mbps | 50 Mbps | 13 | 400 Mbps | 50 Mbps |

A Category 0 low complexity UE may access a cell only if SIB1 indicates that access of Category 0 UEs is supported. If the cell does not support access of Category 0 UEs, the UE considers the cell as barred.

The eNB determines that a UE is a Category 0 UE based on the LCID for CCCH and the UE capability.

The S1 signalling has been extended to include the UE Radio Capability for paging. This paging specific capability information is provided by the eNB to the MME, and the MME uses this information to indicate to the eNB that the paging request from the MME concerns a low complexity UE.

And, since it is able to perform transmission and reception on specific time only without performing transmission and reception at the same time like FIG. 6A, it may be able to perform an operation of TDD in FDD (since transmission and reception are not performed at the same time). Additionally, unlike legacy TDD, since it is able to provide sufficient switching time as much as 1ms to a section at which switching is performed between transmission and reception, it is able to expect a revolutionary cost reduction effect in terms of overall hardware part especially a modem and an RF. On the contrary, according to a regulation of a legacy LTE UE, it is mandatory to use at least 2 or more reception antennas.

NB-IoT (Narrow Band Internet of Things) provides access to network services using physical layer optimized for very low power consumption (e.g. full carrier bandwidth is 180 kHz, subcarrier spacing can be 3.75 kHz or 15 kHz).

As indicated in the relevant subclauses in this specification, a number of E-UTRA protocol functions supported by all Rel-8 UEs are not used for NB-IoT and need not be supported by eNBs and UEs only using NB-IoT. For NB-IoT, the narrowband physical downlink control channel (NPDCCH) is located in available symbols of configured subframes. Within a PRB pair, two control channel elements are defined, with each control channel element composed of resources within a subframe. NPDCCH supports aggregations of 1 and 2 control channel elements and repetition. NPDCCH supports C-RNTI, Temporary C-RNTI, P-RNTI, and RA-RNTI.

The contention-based random access is supported for NB-IoT. Configuration of RACH parameters may be different per coverage level. RACH attempts/reattempts should follow the assumptions listed below: i) Multiple RACH attempts are supported, ii) RACH reattempts may be done on the same or different coverage level, iii) Triggering too many attempts needs to be avoided. There will be one or more thresholds that limit the number of attempts, MAX NUMBER OF ATTEMPTS or similar per coverage level, and iv) MAC indicates random access problem to the RRC layer, when MAC has exhausted all attempts for a RACH procedure.

RAN node can determine the UE's coverage level from the random access procedure. How this is done depends on the physical layer RACH design. The original eMTC design, e.g. by using S1 Context Release message to indicate coverage level, can be used as the baseline, at least for the UP solution. The CN may include coverage enhancement (CE) level information, Global Cell Id and Paging Attempt Count IE in the Paging message to indicate related information to the RAN node. In idle mode, UEs in general do not make specific access only to report coverage level change.

For NB-IoT, Asynchronous adaptive HARQ is supported, a single HARQ process is supported for dedicated transmissions (1 for UL and 1 for DL), and An NB-IoT UE only needs to support half duplex operations.

For NB-IoT, the RLC layer supports the following functions: i) Transfer of upper layer PDUs, ii) Concatenation, segmentation and reassembly of RLC SDUs. But the following RLC layer functions are assumed not supported: i) Reordering of RLC data PDUs (dependent on HARQ mechanism), ii) Duplicate detection (dependent on HARQ mechanism), and iii) the RLC UM is not supported.

The PDCP layer supports the following functions: i) PDCP SN size is 7 bits (or less), ii) Transfer of data (user plane or control plane), iii) Header compression and decompression of IP data flows using the ROHC protocol, iv) Ciphering and Integrity Protection, and v) Ciphering and deciphering. But the following PDCP layer functions are assumed not supported: i) In-sequence delivery of upper layer PDUs at PDCP re-establishment procedure for RLC AM (dependent on support of RRC reestablishment and RLC-AM), ii) Duplicate detection and duplicate discarding of lower layer SDUs at PDCP re-establishment procedure for RLC AM (dependent on support of RRC reestablishment and RLC-AM), iii) Duplicate detection and duplicate discarding of lower layer SDUs at PDCP re-establishment procedure for RLC AM (dependent on support of RRC reestablishment and RLC-AM, iv) For split bearers, routing and reordering, and v) PDCP status report.

In particular, discussion on a solution for a performance deterioration problem caused by decrease of output power is in progress by considering a scheme of performing repetitive transmission as shown in FIB. 6B or a TTI bundling technology previously used in VoLTE (Voice of LTE, LTE voice call service). Consequently, it might say that it is able to develop a communication module of low complexity through the low-cost IoT (M2M) technology explained in the Release 12 and the low-power IoT (M2M) technology to which the Release 13 is targeting.

FIG. 7 is a diagram for MAC structure overview in a UE side.

The MAC layer handles logical-channel multiplexing, hybrid-ARQ retransmissions, and uplink and downlink scheduling. It is also responsible for multiplexing/demultiplexing data across multiple component carriers when carrier aggregation is used.

The MAC provides services to the RLC in the form of logical channels. A logical channel is defined by the type of information it carries and is generally classified as a control channel, used for transmission of control and configuration information necessary for operating an LTE system, or as a traffic channel, used for the user data. The set of logical channel types specified for LTE includes Broadcast Control Channel (BCCH), Paging Control Channel (PCCH), Common Control Channel (CCCH), Dedicated Control Channel (DCCH), Multicast Control Channel (MCCH), Dedicated Traffic Channel (DTCH), Multicast Traffic Channel (MTCH).

From the physical layer, the MAC layer uses services in the form of transport channels. A transport channel is defined by how and with what characteristics the information is transmitted over the radio interface. Data on a transport channel is organized into transport blocks. In each Transmission Time Interval (TTI), at most one transport block of dynamic size is transmitted over the radio interface to/from a terminal in the absence of spatial multiplexing. In the case of spatial multiplexing (MIMO), there can be up to two transport blocks per TTI.

Associated with each transport block is a Transport Format (TF), specifying how the transport block is to be transmitted over the radio interface. The transport format includes information about the transport-block size, the modulation-and-coding scheme, and the antenna mapping. By varying the transport format, the MAC layer can thus realize different data rates. Rate control is therefore also known as transport-format selection.

To support priority handling, multiple logical channels, where each logical channel has its own RLC entity, can be multiplexed into one transport channel by the MAC layer. At the receiver, the MAC layer handles the corresponding demultiplexing and forwards the RLC PDUs to their respective RLC entity for in-sequence delivery and the other functions handled by the RLC. To support the demultiplexing at the receiver, a MAC is used. To each RLC PDU, there is an associated sub-header in the MAC header. The sub-header contains the identity of the logical channel (LCID) from which the RLC PDU originated and the length of the PDU in bytes. There is also a flag indicating whether this is the last sub-header or not. One or several RLC PDUs, together with the MAC header and, if necessary, padding to meet the scheduled transport-block size, form one transport block which is forwarded to the physical layer.

In addition to multiplexing of different logical channels, the MAC layer can also insert the so-called MAC control elements into the transport blocks to be transmitted over the transport channels. A MAC control element is used for inband control signaling-for example, timing-advance commands and random-access response. Control elements are identified with reserved values in the LCID field, where the LCID value indicates the type of control information.

Furthermore, the length field in the sub-header is removed for control elements with a fixed length.

The MAC multiplexing functionality is also responsible for handling of multiple component carriers in the case of carrier aggregation. The basic principle for carrier aggregation is independent processing of the component carriers in the physical layer, including control signaling, scheduling and hybrid-ARQ retransmissions, while carrier aggregation is invisible to RLC and PDCP. Carrier aggregation is therefore mainly seen in the MAC layer, where logical channels, including any MAC control elements, are multiplexed to form one (two in the case of spatial multiplexing) transport block(s) per component carrier with each component carrier having its own hybrid-ARQ entity.

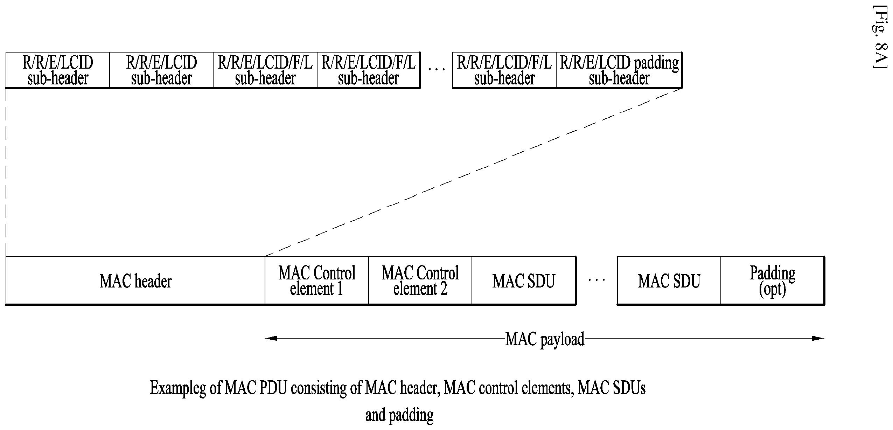

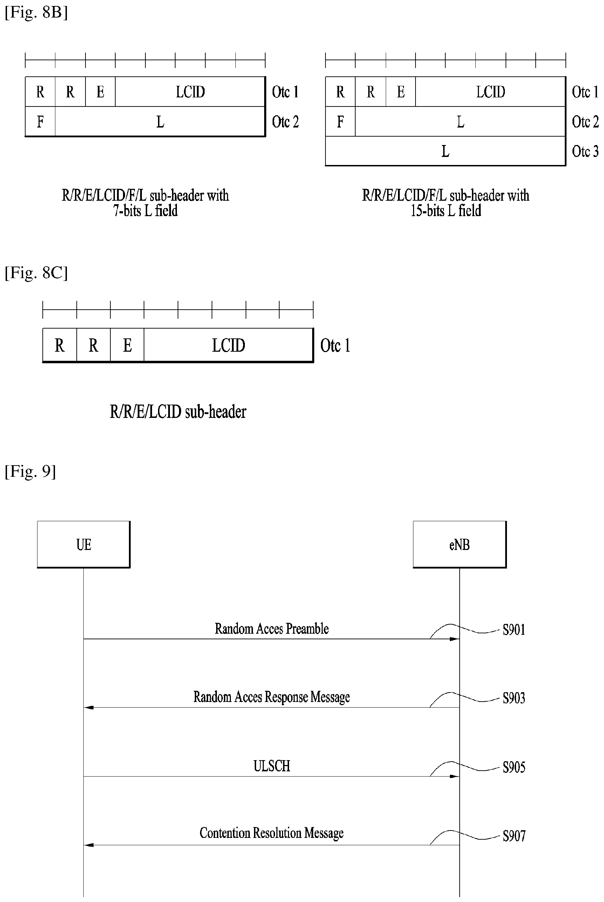

FIGs. 8A to 8B are conceptual diagrams illustrating for a MAC PDU structure.

FIG. 8A is a diagram for MAC PDU consisting of MAC header and MAC-payload, wherein the MAC payload consists of MAC control elements, MAC SDUs and (optionally) padding. A MAC PDU header consists of one or more MAC PDU subheaders, each subheader corresponds to either a MAC SDU, a MAC control element or padding.

A MAC PDU subheader consists of the six header fields R/R/E/LCID/F/L but for the last subheader in the MAC PDU and for fixed sized MAC control elements. The last subheader in the MAC PDU and subheaders for fixed sized MAC control elements consist solely of the four header fields R/R/E/LCID. A MAC PDU subheader corresponding to padding consists of the four header fields R/R/E/LCID.

MAC PDU subheaders have the same order as the corresponding MAC SDUs, MAC control elements and padding. MAC control elements are always placed before any MAC SDU.

Padding occurs at the end of the MAC PDU, except when single-byte or two-byte padding is required. Padding may have any value and the UE shall ignore it. When padding is performed at the end of the MAC PDU, zero or more padding bytes are allowed.

When single-byte or two-byte padding is required, one or two MAC PDU subheaders corresponding to padding are placed at the beginning of the MAC PDU before any other MAC PDU subheader. A maximum of one MAC PDU can be transmitted per TB per UE. A maximum of one MCH MAC PDU can be transmitted per TTI.

The MAC header is of variable size and consists of the following fields:
1) LCID: The Logical Channel ID field identifies the logical channel instance of the corresponding MAC SDU or the type of the corresponding MAC control element or padding as described in Tables 2, 3 and 4 for the DL-SCH, UL-SCH and MCH respectively. There is one LCID field for each MAC SDU, MAC control element or padding included in the MAC PDU. In addition to that, one or two additional LCID fields are included in the MAC PDU, when single-byte or two-byte padding is required but cannot be achieved by padding at the end of the MAC PDU. A UE of Category 0 shall indicate CCCH using LCID "01011", otherwise the UE shall indicate CCCH using LCID "00000". The LCID field size is 5 bits.

**[Table 2] Values of LCID for DL-SCH**

| **Index** | **LCID values** |
|---|---|
| 00000 | CCCH |
| 00001-01010 | Identity of the logical channel |
| 01011-11001 | Reserved |
| 11010 | Long DRX Command |
| 11011 | Activation/Deactivation |
| 11100 | UE Contention Resolution Identity |
| 11101 | Timing Advance Command |
| 11110 | DRX Command |
| 11111 | Padding |

**[Table 3] Values of LCID for UL-SCH**

| **Index** | **LCID values** |
|---|---|
| 00000 | CCCH |
| 00001-01010 | Identity of the logical channel |
| 01011 | CCCH |
| 01100-10101 | Reserved |
| 10110 | Truncated Sidelink BSR |
| 10111 | Sidelink BSR |
| 11000 | Dual Connectivity Power Headroom Report |
| 11001 | Extended Power Headroom Report |
| 11010 | Power Headroom Report |
| 11011 | C-RNTI |
| 11100 | Truncated BSR |
| 11101 | Short BSR |
| 11110 | Long BSR |
| 11111 | Padding |

**[Table 4] Values of LCID for MCH**

| **Index** | **LCID values** |
|---|---|
| 00000 | MCCH (see note) |
| 00001-11100 | MTCH |
| 11101 | Reserved |
| 11110 | MCH Scheduling Information or Extended MCH Scheduling Information |
| 11111 | Padding |
| NOTE: If there is no MCCH on MCH, an MTCH could use this value. | |

2) L: The Length field indicates the length of the corresponding MAC SDU or variable-sized MAC control element in bytes. There is one L field per MAC PDU subheader except for the last subheader and subheaders corresponding to fixed-sized MAC control elements. The size of the L field is indicated by the F field.
3) F: The Format field indicates the size of the Length field as indicated in Table 5. There is one F field per MAC PDU subheader except for the last subheader and subheaders corresponding to fixed-sized MAC control elements. The size of the F field is 1 bit. If the size of the MAC SDU or variable-sized MAC control element is less than 128 bytes, the value of the F field is set to 0, otherwise it is set to 1.

**[Table 5] Values of F field**

| **Index** | **Size of Length field (in bits)** |
|---|---|
| o | 7 |
| 1 | 15 |

4) E: The Extension field is a flag indicating if more fields are present in the MAC header or not. The E field is set to "1" to indicate another set of at least R/R/E/LCID fields. The E field is set to "0" to indicate that either a MAC SDU, a MAC control element or padding starts at the next byte.
5) R: Reserved bit, set to "0".

FIG. 9 is a view illustrating an operating procedure of a UE and an eNB in a contention based random access procedure.

The random access procedure takes two distinct forms. One is a contention based (applicable to first five events) random access procedure and the other one is a non-contention based (applicable to only handover, DL data arrival and positioning) random access procedure. The non- contention based random access procedure is also called as dedicated RACH process.

The random access procedure is performed for the following events related to the PCell: i) initial access from RRC_IDLE; ii) RRC Connection Re-establishment procedure; iii) Handover; iv) DL data arrival during RRC_CONNECTED requiring random access procedure (e.g. when UL synchronisation status is "non-synchronised".), v) UL data arrival during RRC_CONNECTED requiring random access procedure (e.g. when UL synchronisation status is "non-synchronised" or there are no PUCCH resources for SR available.), and vi) For positioning purpose during RRC_CONNECTED requiring random access procedure; (e.g. when timing advance is needed for UE positioning.)

The random access procedure is also performed on a SCell to establish time alignment for the corresponding sTAG.

First, the UE may randomly select a single random access preamble from a set of random access preambles indicated through system information or a handover command, and select and transmit a Physical Random Access Channel (PRACH) capable of transmitting the random access preamble (S901).

There are two possible groups defined and one is optional. If both groups are configured the size of message 3 and the pathloss are used to determine which group a preamble is selected from. The group to which a preamble belongs provides an indication of the size of the message 3 and the radio conditions at the UE. The preamble group information along with the necessary thresholds are broadcast on system information.

A method of receiving random access response information is similar to the above-described non-contention based random access procedure. That is, the UE attempts to receive its own random access response within a random access response reception window indicated by the eNode B through the system information or the handover command, after the random access preamble is transmitted in step S901, and receives a Physical Downlink Shared Channel (PDSCH) using random access identifier information corresponding thereto (S903). Accordingly, the UE may receive a UL Grant, a Temporary C-RNTI, a TAC and the like.

If the UE has received the random access response valid for the UE, the UE may process all of the information included in the random access response. That is, the UE applies the TAC, and stores the temporary C-RNTI. In addition, data which will be transmitted in correspondence with the reception of the valid random access response may be stored in a Msg3 buffer.

The UE uses the received UL Grant so as to transmit the data (that is, the message 3) to the eNode B (S905). The message 3 should include a UE identifier. In the contention based random access procedure, the eNode B may not determine which UEs are performing the random access procedure, but later the UEs should be identified for contention resolution.

Here, two different schemes for including the UE identifier may be provided. A first scheme is to transmit the UE's cell identifier through an uplink transmission signal corresponding to the UL Grant if the UE has already received a valid cell identifier allocated by a corresponding cell prior to the random access procedure. Conversely, the second scheme is to transmit the UE's unique identifier (e.g., S-TMSI or random ID) if the UE has not received a valid cell identifier prior to the random access procedure. In general, the unique identifier is longer than the cell identifier. If the UE has transmitted data corresponding to the UL Grant, the UE starts a contention resolution (CR) timer.

After transmitting the data with its identifier through the UL Grant included in the random access response, the UE waits for an indication (instruction) from the eNode B for contention resolution. That is, the UE attempts to receive the PDCCH so as to receive a specific message (S907). Here, there are two schemes to receive the PDCCH. As described above, the UE attempts to receive the PDCCH using its own cell identifier if the message 3 transmitted in correspondence with the UL Grant is transmitted using the UE's cell identifier, and the UE attempts to receive the PDCCH using the temporary C-RNTI included in the random access response if the identifier is its unique identifier. Thereafter, in the former scheme, if the PDCCH is received through its own cell identifier before the contention resolution timer is expired, the UE determines that the random access procedure has been normally performed and completes the random access procedure. In the latter scheme, if the PDCCH is received through the temporary C-RNTI before the contention resolution timer has expired, the UE checks data transferred by the PDSCH indicated by the PDCCH. If the unique identifier of the UE is included in the data, the UE determines that the random access procedure has been normally performed and completes the random access procedure.

The Temporary C-RNTI is promoted to C-RNTI for a UE which detects RA success and does not already have a C-RNTI; it is dropped by others. A UE which detects RA success and already has a C-RNTI, resumes using its C-RNTI.

When CA is configured, the first three steps of the contention based random access procedures occur on the PCell while contention resolution (S907) can be cross-scheduled by the PCell.

In LTE, there is only SRB0 before the UE receives RRCConnectionSetup message from the eNB after reception of Msg4 during a random access procedure. Accordingly, when the UE transmits an Msg3 including RRCConnectionRequest message, the buffer size is zero because there is only RRCConnectionRequest message in SRB0 and SRB1 is not established yet.

In NB-IOT, a solution is under discussion where the UE transmits the NAS message as soon as possible and then enters e.g., DRX or IDLE mode in order to save UE's battery.

As per the legacy BSR operation and RRC Connection Establishment procedure, 5 steps are required for the UE to transmit a NAS message as follows:
i) step 1. The UE transmits RRCConnectionRequest in Msg3 over SRB0, ii) step 2. The UE receives RRCConnectionSetup in Msg4, enters RRC_CONNECTED, and establishes SRB1, iii) step 3. The UE transmits an Msg5 including RRCConnectionSe-tupComplete message and a BSR over SRB1, iv) step 4. The UE receives an UL grant, and v) step 5. The UE transmits NAS message by using the received UL grant.

This 5 steps of procedure stems from the restriction that the UE cannot send the BSR earlier than step 3, i.e., step 1. If the buffer size taking the NAS message of SRB1 into account can be transmitted earlier than step 3, it would helpful for UE's battery saving because the UE can enter e.g., DRX cycle or IDLE mode immediately after transmitting the NAS message in Msg5 by receiving an appropriate UL grant in step 2 above.

In NB-IOT, the UE sends a data volume indicator which indicates the amount of data to be transmitted on a radio bearer which is not yet established.

In order to send the data volume indicator (DataVolIndicator), if MAC signaling is used, one octet for data volume field and one octet for MAC subheader is to be used. However, in sending 2 octets of MAC PDU for DataVolIndicator, there could be a case that the received UL grant size is not sufficient to include 2 octets of DataVolIndicator. For example, according to the current MAC specification, 56 bits is the minimum required UL grant size for UL grant for Msg3 in Contention-based RA procedure. If the UE is to send the DataVolIndicator in Msg3 during a RA procedure, it is not possible because 56 bits are to be used for RRC message in Msg3.

From physical layer point of view, the minimum UL grant size can be easily extended to 64 bits. However, 64 bits is still not sufficient to include 2 octets of DataVolIndicator because only 1 octet remains after including RRC message in Msg3. Therefore, a mechanism is needed to include DataVolIndicator by using the remaining one octet.

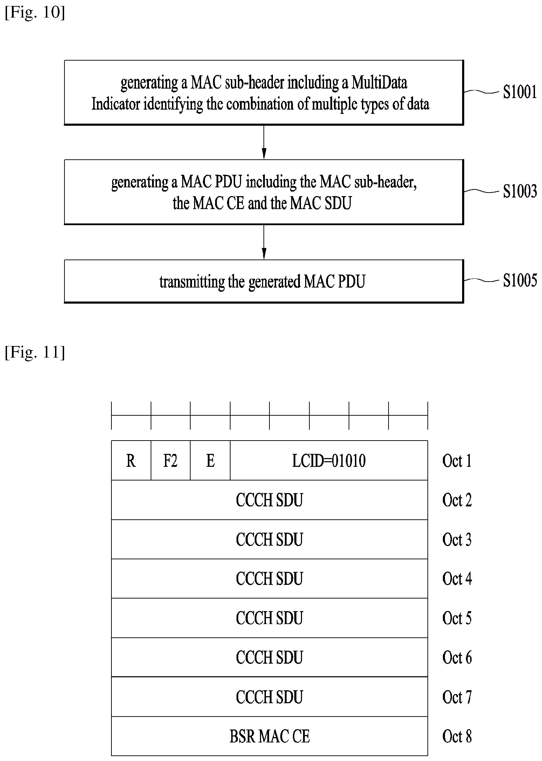

FIG. 10 is a conceptual diagram for transmitting a MAC PDU including an indicator identifying a combination of multiple types of data in wireless communication system according to embodiments of the present invention.

It is invented that an UE indicates to an eNB that a MAC PDU includes a combination of multiple types of data in the MAC PDU by using an Indicator, i.e., MultiData Indicator.

The UE generates a MAC sub-header including a MultiData Indicator identifying the combination of multiple types of data (S1001).

The MultiData Indicator identifies the combination of multiple types of data included in the MAC PDU as follows:
i) a combination of specific logical channel instance of a MAC SDU and a specific type of a MAC control element (MAC CE); or
ii) a combination of specific types of MAC CEs; or
iii) a combination of specific logical channel instances of MAC SDUs.

The fact that the MultiData Indicator identifies the combination of specific logical channel instances of a MAC SDU and a specific type of MAC CE in the MAC PDU means that the MultiData Indicator identifies both a MAC CE and a MAC SDU.

Preferably, the MultiData Indicator is included in a MAC sub-header of a MAC PDU including a combination of multiple types of data. The MultiData Indicator can be an LCID.

For example, an LCID value identifies both of a MAC SDU from CCCH and a specific MAC control element.

Preferably, the MAC SDU is a CCCH MAC SDU, and the specific MAC CE includes at least one of buffer status information or power headroom information.

Preferably, the specific MAC CE is the specific MAC CE can be a BSR MAC CE or a PHR MAC CE.

Preferably, the specific MAC CE is a Data Volume and Power Headroom Report (DPR) MAC control element including information about the amount of data available for transmission in the UL buffers associated with the MAC entity, and information about the difference between the nominal UE maximum transmission power and the estimated transmission power for UL-SCH transmission for the Serving Cell.

The UE is configured to use a MultiData Indicator. A specific value of MultiData Indicator is allocated for a specific combination of multiple types of data. For example, an LCID value is allocated for a specific combination of multiple types of data.

If the UE has a combination of multiple types of data to transmit, the UE includes the MultiData Indicator allocated for the combination in the MAC PDU, and the UE includes the combination of multiple types of data in a pre-defined order.

For example, the UE sets the LCID field to a specific value indicating the combination of multiple types of data, and if the UE has CCCH SDU and a MAC CE, the UE includes the CCCH SDU first and then includes the MAC CE, or the UE includes the MAC CE first and then includes the CCCH SDU.

Preferably, the MAC CE is always placed before the MAC SDU in the MAC PDU.

Preferably, the size of MAC sub-header is 1 octet.

And the UE generates a MAC PDU including the MAC sub-header, the MAC CE and the MAC SDU (S1003), and transmits the generated MAC PDU (S1005).

Preferably, the MAC PDU is transmitted using a message in response to a Random

Access Response (RAR) (e.g. message 3) during a random access procedure.

And preferably, the UE is an NB-IoT UE.

When the eNB receives the MAC PDU including a MultiData Indicator, the eNB checks the value of MultiData Indicator and the eNB considers the combination of multiple types of data are included in the MAC PDU as indicated by the MultiData Indicator.

FIG. 11 is an example for a MAC PDU including an indicator identifying a combination of multiple types of data in wireless communication system according to embodiments of the present invention.

a LCID value of 01010 is allocated for a combination of 'CCCH and a BSR MAC CE'. If the UE generates a MAC PDU including an SDU from a CCCH and a BSR MAC CE, the UE includes the MAC subheader including the LCID field set to 01010, and the UE includes the CCCH SDU followed by the BSR MAC CE.

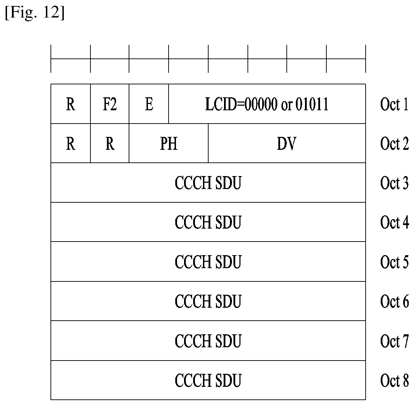

FIG. 12 is an example for a MAC PDU including an LCID identifying MAC CE and CCCH MAC SDU in wireless communication system according to embodiments of the present invention.

The Data Volume and Power Headroom reporting procedure is only applicable for NB-IoT UEs and is used to provide the serving eNB with information about the amount of data available for transmission in the UL buffers associated with the MAC entity, and to provide the serving eNB with information about the difference between the nominal UE maximum transmission power and the estimated transmission power for UL-SCH transmission for the Serving Cell. The reporting is done using the DPR MAC control element, which is sent in Msg3 together with a CCCH SDU.

The Data Volume and Power Headroom Report (DPR) MAC control element is identified by the MAC PDU subheader used for the CCCH MAC SDU (i.e., 00000 or 01011). It does not add any additional subheader and is always placed before the CCCH MAC SDU.

The UE sends a data volume indicator (DVI) in order to inform the eNB of the amount of data to be transmitted on a radio bearer which is not yet established, it is not yet decided the exact format of DVI or the layer to generate DVI though. Both of BSR and DVI aim at reporting the amount of data to the eNB. However, DVI is different from BSR in that DVI informs the eNB of amount of data which is not stored in PDCP/RLC because the radio bearer is not yet established. In this sense, there can be a couple of options in realizing DVI including: i) RRC calculates the amount of data, includes DVI in RRCConnectionRequest message, and delivers RRCConnectionRequest message including DVI to lower layer (option 1), or ii) RRC indicates the amount of data to MAC and MAC reports DVI together with CCCH SDU in Msg3 (option 2).

In Option 1, RRC generates DVI by calculating the amount of data to be transmitted via a radio bearer which is not yet established. The size of DVI would be 1 octet. Then, RRC includes DVI in RRCConnectionRequest message and delivers it to lower layer via SRB0.

From MAC point of view, MAC receives only one CCCH SDU from upper layer, hence, adds one MAC subheader indicating CCCH SDU. The only difference compared to the legacy is that the size of CCCH SDU would be 8 octets for Msg3 (7 octets RRCConnectionRequest + 1 octet MAC subheader)

Regarding the LCID value for CCCH SDU, as the eNB would know that NB-IOT UE performs RA procedure by its RA preamble and/or RACH resource, the current LCID value for CCCH SDU (00000 or 01011) can still be used for the increased size of CCCH SDU. However, as CCCH SDU size is increased and 1 octet MAC subheader doesn't include L field, a new LCID value may be needed in order to indicate the increased size of CCCH SDU.

In case of option 1, there are three advantages: i) there is no RANI impact because the size of Msg3 including DVI and RRCConnectionRequest will be 8 octets, ii) there is no interaction between RRC and MAC, and iii) impact on MAC can be minimized, i.e., no need to introduce a new type of BSR (DVI), but there are two disadvantage: i) the RRCConnectionRequest message needs to be updated to include DVI, and ii) new LCID may be needed.

In Option 2, RRC indicates the amount of data to MAC. Then, MAC generates DVI MAC CE which would be 1 octet and includes DVI MAC CE and CCCH SDU in the same MAC PDU for Msg3.

In MAC, a DVI trigger condition, a new DVI MAC CE, and relative priorities for DVI should be specified.

As a new MAC CE, i.e., DVI MAC CE, is to be introduced, a new LCID is required for DVI MAC CE. However, given that the UE sends DVI MAC CE only when reporting the amount of data of radio bearer which is not yet established, we don't expect that the UE sends only DVI MAC CE without RRC message. In this sense, following options can further be considered: i) a new LCID for DVI MAC CE, and ii) a LCID for DVI MAC CE+CCCH SDU.

One new LCID is allocated for DVI MAC CE. Then, the size of Msg3 including DVI MAC CE and CCCH SDU will be 9 octets (6 octets CCCH SDU + 1 octet DVI MAC CE + 2 octets MAC subheaders).

In this case, there is RANI impact because the size of Msg3 including DVI MAC CE and CCCH SDU will be 9 octets exceeding 8 octets, and interaction between RRC and MAC is needed. Indeed, a new type of BSR, i.e., DVI, needs to be introduced in MAC, i.e., to specify DVI trigger condition, introduce a new DVI MAC CE, and a new LCID is allocated for DVI MAC CE.

Alternatively, a LCID can be allocated for the combination of DVI MAC CE and CCCH SDU. Then, the size of Msg3 including DVI MAC CE and CCCH SDU will be 8 octets (6 octets CCCH SDU + 1 octet DVI MAC CE + 1 octet MAC subheader).

One may say that an LCID should be allocated for one type of data or one logical channels as in the legacy. However, as long as the LCID clearly identifies what are carried in the MAC PDU, there seems to be no harm to allocate the LCID for a combination of data.

In this case, the current RRCConnectionRequest message can be reused, and there is no RANI impact because the size of Msg3 including DVI MAC CE and CCCH SDU will be 8 octets.

In the examples of the present invention, a specific operation described as performed by the BS may be performed by an upper node of the BS. Namely, it is apparent that, in a network comprised of a plurality of network nodes including a BS, various operations performed for communication with an MS may be performed by the BS, or network nodes other than the BS. The term 'eNB' may be replaced with the term 'fixed station', 'Node B', 'Base Station (BS)', 'access point', etc.

The above-described examples may be implemented by various means, for example, by hardware, firmware, software, or a combination thereof.

In a hardware configuration, the method according to the embodiments of the present invention may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, or microprocessors.

In a firmware or software configuration, the method according to the embodiments of the present invention may be implemented in the form of modules, procedures, functions, etc. performing the above-described functions or operations. Software code may be stored in a memory unit and executed by a processor. The memory unit may be located at the interior or exterior of the processor and may transmit and receive data to and from the processor via various known means.

The scope of the invention should be determined by the appended claims.

### Industrial Applicability

While the above-described method has been described centering on an example applied to the 3GPP LTE system, the present invention is applicable to a variety of wireless communication systems in addition to the 3GPP LTE system.

## Claims

1. A method for a user equipment, UE, operating in a wireless communication system, the method comprising:
generating a Medium Access Control, MAC, sub-header;
generating a MAC Protocol Data Unit, PDU, including a MAC header and a MAC payload, wherein the MAC header includes the MAC sub-header and the MAC payload includes a MAC Control Element, CE, and a MAC Service Data Unit, SDU; and
transmitting, to a base station, BS, the generated MAC PDU,
wherein both a logical channel instance of the MAC SDU and a type of MAC CE are identified by the MAC sub-header, wherein the MAC CE is used for inband control signaling and
wherein the MAC SDU includes data of a Common Control Channel, CCCH.

2. The method according to claim 1, wherein the MAC CE is placed before the MAC SDU in the MAC PDU.

3. The method according to claim 1, wherein the MAC CE includes at least one of buffer status information or power headroom information.

4. The method according to claim 1, wherein a size of the MAC sub-header is 1 octet.

5. The method according to claim 1, wherein the UE is a Narrow Band Internet of Things, NB-IOT, UE.

6. The method according to claim 1, wherein the MAC PDU is transmitted included in a message in response to a Random Access Response, RAR, during a random access procedure.

7. A User Equipment, UE, (10) for operating in a wireless communication system, the UE comprising:
a Radio Frequency, RF, module (135); and
a processor (110) operably coupled with the RF module and configured to:
generate a Medium Access Control, MAC, sub-header,
generate a MAC Protocol Data Unit, PDU, including a MAC header and a MAC payload, wherein the MAC header includes the MAC sub-header and the MAC payload includes a MAC Control Element, CE, and a MAC Service Data Unit, SDU, and
transmit, to a base station, BS, the generated MAC PDU,
wherein both a logical channel instance of the MAC SDU and a type of MAC CE are identified by the MAC sub-header, wherein the MAC CE is used for inband control signaling and
wherein the MAC SDU includes data of a Common Control Channel, CCCH.

8. The UE according to claim 7, wherein the MAC CE is placed before the MAC SDU in the MAC PDU.

9. The UE according to claim 7, wherein the MAC CE includes at least one of buffer status information or power headroom information.

10. The UE according to claim 7, wherein a size of the MAC sub-header is 1 octet.

11. The UE according to claim 7, wherein the UE is a Narrow Band Internet of Things, NB-IOT, UE.

12. The UE according to claim 7, wherein the MAC PDU is transmitted included in a message in response to a Random Access Response, RAR, during a random access procedure.

## Patentansprüche

1. Verfahren für ein Benutzergerät, UE, das in einem Drahtloskommunikationssystem betrieben wird, wobei das Verfahren umfasst:
Erzeugen eines Medienzugriffssteuerungs-, MAC, Subheaders;
Erzeugen einer MAC-Protokolldateneinheit, PDU, einschließlich eines MAC-Headers und einer MAC-Nutzlast, wobei der MAC-Header den MAC-Subheader enthält und die MAC-Nutzlast ein MAC-Steuerelement, CE, und eine MAC-Dienstdateneinheit, SDU, enthält; und
Senden der erzeugten MAC-PDU an eine Basisstation, BS,
wobei sowohl eine logische Kanalinstanz der MAC-SDU als auch ein Typ von MAC-CE durch den MAC-Subheader gekennzeichnet werden, wobei das MAC-CE für eine Inbandsteuersignalisierung verwendet wird und
wobei die MAC-SDU Daten eines gemeinsamen Steuerkanals, CCCH, enthält.

2. Verfahren nach Anspruch 1, wobei das MAC-CE vor der MAC-SDU in der MAC-PDU platziert ist.

3. Verfahren nach Anspruch 1, wobei das MAC-CE mindestens eine von einer Pufferstatusinformation oder einer Leistungsreserveinformation enthält.

4. Verfahren nach Anspruch 1, wobei eine Größe des MAC-Subheaders 1 Oktett beträgt.

5. Verfahren nach Anspruch 1, wobei das UE ein Schmalband-Internet-der-Dinge-, NB-IOT, UE ist.

6. Verfahren nach Anspruch 1, wobei die MAC-PDU als Reaktion auf eine Direktzugriffsantwort, RAR, während einer Direktzugriffsprozedur in einer Nachricht enthalten gesendet wird.

7. Benutzergerät, UE, (10) zum Betrieb in einem Drahtloskommunikationssystem, wobei das UE umfasst:
ein Hochfrequenz-, RF, Modul (135); und
einen Prozessor (110), der betriebsmäßig mit dem RF-Modul gekoppelt ist und eingerichtet ist zum:
Erzeugen eines Medienzugriffssteuerungs-, MAC, Subheaders,
Erzeugen einer MAC-Protokolldateneinheit, PDU, einschließlich eines MAC-Headers und einer MAC-Nutzlast, wobei der MAC-Header den MAC-Subheader enthält und die MAC-Nutzlast ein MAC-Steuerelement, CE, und eine MAC-Dienstdateneinheit, SDU, enthält, und
Senden der erzeugten MAC-PDU an eine Basisstation, BS,
wobei sowohl eine logische Kanalinstanz der MAC-SDU als auch ein Typ von MAC-CE durch den MAC-Subheader gekennzeichnet werden, wobei das MAC-CE für eine Inbandsteuersignalisierung verwendet wird und
wobei die MAC-SDU Daten eines gemeinsamen Steuerkanals, CCCH, enthält.

8. UE nach Anspruch 7, wobei das MAC-CE vor der MAC-SDU in der MAC-PDU platziert ist.

9. UE nach Anspruch 7, wobei das MAC-CE mindestens eine von einer Pufferstatusinformation oder einer Leistungsreserveinformation enthält.

10. UE nach Anspruch 7, wobei eine Größe des MAC-Subheaders 1 Oktett beträgt.

11. UE nach Anspruch 7, wobei das UE ein Schmalband-Internet-der-Dinge-, NB-IOT, UE ist.

12. UE nach Anspruch 7, wobei die MAC-PDU als Reaktion auf eine Direktzugriffsantwort, RAR, während einer Direktzugriffsprozedur in einer Nachricht enthalten gesendet wird.

## Revendications

1. Procédé pour un équipement utilisateur, UE, opérant dans un système de communication sans fil, le procédé comprenant :
la génération d'un sous-en-tête de contrôle d'accès au support, MAC ;
la génération d'une unité de données de protocole, PDU, MAC, incluant un en-tête MAC et une charge utile MAC, dans lequel l'en-tête MAC inclut le sous-en-tête MAC et la charge utile MAC inclut un élément de contrôle, CE, MAC, et une unité de données de service, SDU, MAC ; et
la transmission, à une station de base, BS, de la PDU MAC générée,
dans lequel les deux parmi une instance de canal logique de la SDU MAC et un type du CE MAC sont identifiés par le sous-en-tête MAC, dans lequel le CE MAC est utilisé pour une signalisation de contrôle intrabande et
dans lequel la SDU MAC inclut des données d'un canal commun de contrôle, CCCH.

2. Procédé selon la revendication 1, dans lequel le CE MAC est placé avant la SDU MAC dans la PDU MAC.

3. Procédé selon la revendication 1, dans lequel le CE MAC inclut au moins une parmi des informations de statut de tampon ou des informations de marge de puissance.

4. Procédé selon la revendication 1, dans lequel une taille du sous-en-tête MAC est 1 octet.

5. Procédé selon la revendication 1, dans lequel l'UE est un UE d'internet des objets en bande étroite, NB-IOT.

6. Procédé selon la revendication 1, dans lequel la PDU MAC est transmise incluse dans un message en réponse à une réponse d'accès aléatoire, RAR, pendant une procédure d'accès aléatoire.

7. Équipement utilisateur, UE, (10) pour opérer dans un système de communication sans fil, l'UE comprenant :
un module en radiofréquence, RF, (135) ; et
un processeur (110) opérationnellement couplé avec le module RF et configuré pour :
générer un sous-en-tête de contrôle d'accès au support, MAC ;
générer une unité de données de protocole, PDU, MAC, incluant un en-tête MAC et une charge utile MAC, dans lequel l'en-tête MAC inclut le sous-en-tête MAC et la charge utile MAC inclut un élément de contrôle, CE, MAC, et une unité de données de service, SDU, MAC ; et
transmettre, à une station de base, BS, la PDU MAC générée,
dans lequel les deux parmi une instance de canal logique de la SDU MAC et un type du CE MAC sont identifiés par le sous-en-tête MAC, dans lequel le CE MAC est utilisé pour une signalisation de contrôle intrabande, et
dans lequel la SDU MAC inclut des données d'un canal commun de contrôle, CCCH.

8. UE selon la revendication 7, dans lequel le CE MAC est placé avant la SDU MAC dans la PDU MAC.

9. UE selon la revendication 7, dans lequel le CE MAC inclut au moins une parmi des informations de statut de tampon ou des informations de marge de puissance.

10. UE selon la revendication 7, dans lequel une taille du sous-en-tête MAC est 1 octet.

11. UE selon la revendication 7, dans lequel l'UE est un UE d'internet des objets en bande étroite, NB-IOT.

12. UE selon la revendication 7, dans lequel la PDU MAC est transmise incluse dans un message en réponse à une réponse d'accès aléatoire, RAR, pendant une procédure d'accès aléatoire.
